# EUROPÄISCHE PATENTANMELDUNG

(11) **EP 2 095 860 A1**
(43) Veröffentlichungstag der Anmeldung: **02.09.2009**
(21) Anmeldenummer: 08020962.0
(22) Anmeldetag: 03.12.2008
(51) Int. Cl.: B01D 46/12, B01D 46/52, B01D 46/00

(54) **Filterelement mit doppeltem Filtermedium**

(30) Priorität: 12.02.2008 DE 102008008741
(71) Anmelder: Carl Freudenberg KG, 69469 Weinheim (DE)
(72) Erfinder: Häfner, Uwe, 69469 Weinheim (DE); Herberg, Felix, 64646 Heppenheim (DE); Dobner, Roland, 69483 Wald-Michelbach (DE)

(57) **Zusammenfassung**

Ein Filterelement, umfassend eine Anströmseite (1) und eine Abströmseite (2), wobei sowohl auf der Anströmseite (1) als auch auf der Abströmseite (2) jeweils ein Filtermedium (3, 4) angeordnet ist und wobei zwischen den Filtermedien (3, 4) eine Führungseinrichtung (5) zur Führung eines zu filternden Fluids angeordnet ist, ist im Hinblick auf die Aufgabe, ein Filterelement anzugeben, welches bei möglichst großer Anströmfläche eine lange Lebensdauer aufweist, **dadurch gekennzeichnet, dass** die Führungseinrichtung (5) mindestens zwei Strömungskanäle (6, 7) ausbildet, wobei ein erster Strömungskanal (6) mit dem abströmseitigen Filtermedium (4) und ein zweiter Strömungskanal (7) mit dem anströmseitigen Filtermedium (3) strömungsverbunden ist.

## Beschreibung

### Technisches Gebiet

Die Erfindung betrifft ein Filterelement, umfassend eine Anströmseite und eine Abströmseite, wobei sowohl auf der Anströmseite als auch auf der Abströmseite jeweils ein Filtermedium angeordnet ist und wobei zwischen den Filtermedien eine Führungseinrichtung zur Führung eines zu filternden Fluids angeordnet ist.

### Stand der Technik

Filterelemente der genannten Art sind aus dem Stand der Technik bereits bekannt. Insbesondere ist bekannt, zwei Filtermedien sandwichartig anzuordnen und mit einem ersten Filtermedium Partikel erster Größe und mit einem zweiten Filtermedium Partikel zweiter Größe abzuscheiden. Dabei ist die Führungseinrichtung häufig als Zwischenlage oder selbst als Filtermedium ausgestaltet.

Des Weiteren ist bekannt, zwei Filtermedien durch ein Gitter voneinander zu trennen, wobei ein zu filterndes Fluid zunächst durch das erste Filtermedium, dann durch das Gitter und schließlich durch das zweite Filtermedium hindurchströmt.

Bei den bekannten Filterelementen ist nachteilig, dass die serielle Anordnung von Filtermedien einen erhöhten Strömungswiderstand bewirkt. Des Weiteren ist nachteilig, dass bei einer Hintereinanderschaltung von Filtermedien das zuerst angeströmte im Laufe der Zeit verstopfen und dadurch einen erhöhten Strömungswiderstand aufbauen kann. Schließlich ist die filternde Fläche, nämlich die Anströmfläche, auf die Ausdehnung des ersten Filtermediums beschränkt.

### Darstellung der Erfindung

Der Erfindung liegt daher die Aufgabe zugrunde, ein Filterelement anzugeben, welches bei möglichst großer Anströmfläche eine lange Lebensdauer aufweist.

Erfindungsgemäß wird die voranstehende Aufgabe mit den Merkmalen des Patentanspruchs 1 gelöst. Danach ist ein Filterelement der eingangs genannten Art dadurch gekennzeichnet, dass die Führungseinrichtung mindestens zwei Strömungskanäle ausbildet, wobei ein erster Strömungskanal mit dem abströmseitigen Filtermedium und ein zweiter Strömungskanal mit dem anströmseitigen Filtermedium strömungsverbunden ist.

Erfindungsgemäß ist erkannt worden, dass ein Filterelement der genannten Art sicherstellt, dass zwei Filtermedien gleichzeitig angeströmt werden können. Das erfindungsgemäße Filterelement erlaubt eine Parallelschaltung zweier Filtermedien, in dem nämlich ein Fluidstrom aufgespalten und in zwei Strömungskanäle umgeleitet wird. Durch diese konkrete Ausgestaltung ist es möglich, zwei Filtermedien platzsparend anzuordnen und dennoch eine große Anströmfläche zur Verfügung zu stellen. Die Filtermedien reichem sich im Laufe der Zeit unabhängig voneinander mit Partikeln an, die aus dem zu filternden Fluid herausgefiltert werden. Insoweit ist durch eine Entkopplung der Filtermedien voneinander eine große Anströmfläche bei erhöhter Lebensdauer realisiert. Folglich ist die eingangs genannte Aufgabe gelöst.

Anströmseitig könnte ein Einlass zum ersten Strömungskanal ausgebildet sein, der neben dem anströmseitigen Filtermedium positioniert ist. Diese konkrete Ausgestaltung stellt sicher, dass ein Teil des zu filternden Fluids durch das anströmseitige Filtermedium gefiltert und ein anderer Teil durch das abströmseitige Filtermedium gefiltert wird.

Vor diesem Hintergrund ist denkbar, dass abströmseitig ein Einlass zum zweiten Strömungskanal ausgebildet ist, der neben dem abströmseitigen Filtermedium positioniert ist. Der Einlass zum zweiten Strömungskanal erlaubt ein Austreten des vom anströmseitigen Filtermedium gefilterten Teils des zu filternden Fluids.

Die Führungseinrichtung könnte als Platte ausgebildet sein. Vor diesem Hintergrund ist konkret denkbar, dass die Platte geschlossen ausgebildet ist und keine Ausnehmungen oder Aussparungen aufweist. Eine Platte erlaubt ein großflächiges Umleiten eines Fluidstroms zu einem der Filtermedien.

Die Führungseinrichtung könnte mit einem Rahmen einstückig ausgebildet sein. Durch diese konkrete Ausgestaltung ist ein kompakter Aufbau des Filterelements ermöglicht. In einen Rahmen, der mit der Führungseinrichtung einstückig ausgebildet ist, können die Filtermedien eingelegt oder eingepresst werden. Insoweit müssen die Filtermedien nicht räumlich getrennt voneinander in unterschiedlichen Filterelementen parallel zueinander positioniert werden. Vielmehr können die Filtermedien in einem einzigen Bauteil, nämlich dem Rahmen mit Führungseinrichtung, gemeinsam zur parallelen Anströmung angeordnet werden.

Vor diesem Hintergrund ist denkbar, dass die Filtermedien von einem Rahmen umgeben sind. Hierdurch wird sichergestellt, dass das zu filternde Fluid gezwungen wird, durch die Filtermedien hindurchzutreten. Dabei ist konkret denkbar, dass der Rahmen die Filtermedien unter leichter Komprimierung festlegt.

Die Filtermedien könnten parallel zueinander angeordnet sein. Durch diese konkrete Ausgestaltung ist ein besonders flach bauendes Filterelement realisierbar. Dabei ist denkbar, dass die Führungseinrichtung, weiche als ebene Platte ausgebildet ist, mit den Filtermedien jeweils einen gewissen Neigungswinkel einschließt. Je kleiner der eingeschlossene Winkel ist, desto flacher baut das Filterelement.

Zumindest ein Filtermedium könnte als Faltenbalg ausgebildet sein. Die Ausgestaltung des Filtermediums als Faltenbalg erlaubt eine effektive Vergrößerung der Fläche des Filtermediums. Vor diesem Hintergrund ist denkbar, dass der Faltenbalg aus einem Vliesstoff gefertigt ist.

Zumindest ein Filtermedium könnte mindestens eine Lage mit Fasern aufweisen, deren Durchmesser höchstens 10 µm betragen. Ein solches Filtermedium erlaubt, mindestens 90% einer Menge von Feinstaubpartikeln abzuscheiden, deren Durchmesser zwischen 0,3 und 0,5 µm liegen. Des Weiteren ist das Filtermedium gemäß DIN 71460 Teil 1 geeignet, mindestens 92% einer Menge von Feinstaubpartikeln abzuscheiden, deren Durchmesser zwischen 0,5 und 1 µm liegen. Weiter ist das Filtermedium gemäß DIN 71460 Teil 1 geeignet, mindestens 97% einer Menge von Feinstaubpartikeln abzuscheiden, deren Durchmesser zwischen 1 und 5 µm liegen. Schließlich ist das Filtermedium gemäß DIN 71460 Teil 1 geeignet, mindestens 99% einer Menge von Feinstaubpartikeln abzuscheiden, deren Durchmesser mindestens 5 µm betragen. Ein Filtermedium mit den zuvor genannten Abscheidegraden ist im hohen Maße als Feinstaubfilter geeignet.

Mindestens eine Lage könnte Polycarbonat-Fasem aufweisen. Polycarbonat ist besonders temperaturstabil.

Diese Lage könnte ein Flächengewicht von 2 - 30 g/m² zeigen und aus Polyolefin-, PES (Polyester) - oder Polycarbonat-Fasern bestehen, die Durchmesser von 1 - 10 µm aufweisen. Ein Filtermedium mit einer solchen Lage zeigt ein besonders geringes Gewicht und hervorragendes Abscheidevermögen für Feinstpartikel.

Mindestens eine Lage könnte aus Polypropylen-Meltblown-Fasern bestehen. Das Melt-Blown-Verfahren erlaubt eine problemlose Einstellung der Lagenstärke und Lagenporosität.

Mindestens eine weitere Lage könnte Polyester-Fasern, Polyolefin-Fasern oder eine Mischung aus Polyester-Fasern und Polyolefin-Fasern aufweisen. Polyolefine, insbesondere Polypropylen, eignen sich besonders gut zur Durchführung eines Melt-Blown-Verfahrens. Polyester-Fasern sind mechanisch besonders stabil.

Das Filtermedium könnte aus einem mehrlagigen partikeifilternden Bereich aufgebaut sein. Hierdurch können in unterschiedlichen Lagen unterschiedlich große Partikel selektiv abgeschieden werden. Der mehrlagige partikelfilternde Bereich könnte 2- oder 3-lagig aufgebaut sein. Dabei könnte eine Lage als Vorfilter aus einem Polyolefin oder PES mit oder ohne elektrostatischer Aufladung ausgestaltet sein. Dieser könnte ein Flächengewicht von 40 - 120 g/m² zeigen und Fasern mit Durchmessern von 20 - 50 µm aufweisen. Eine weitere Lage könnte aus Polyolefin- oder Polycarbonat-Mikrofasern mit elektrostatischer Aufladung bestehen. Diese Lage könnte ein Flächengewicht von 1 - 30 g/m² und Fasern mit Durchmessern von 1 - 10 µm aufweisen. Eine optionale dritte Lage könnte als Polyolefin- oder PES-Abdecklage mit oder ohne elektrostatische Aufladung ausgestaltet sein. Diese optionale Lage könnte ein Flächengewicht von 10 - 50 g/m² und Fasern mit Durchmessern von 20 - 50 µm aufweisen. Ein solches Filtermedium kann bei hinreichender Stabilität Feinstpartikel abscheiden.

Eine Lage aus Polypropylen-Fasern oder Polycarbonat-Fasern könnte sandwichartig von Lagen aus Polyester-Fasern und/oder Polyolefin-Fasern eingeschlossen sein. Hierdurch kann eine relativ dünne und feinporöse Schicht zur Abscheidung von Feinstpartikeln stabilisiert werden. Besonders bevorzugt könnte eine erste Lage aus Polypropylen-Fasern oder Polyester-Fasern mit Durchmessem von 30 - 50 µm aufgebaut sein und ein Flächengewicht von 70 g/m² aufweisen. An diese Lage könnte sich eine zweite Lage aus Polypropylen-Meltblown-Fasern anschließen, die ein Flächengewicht von 2 bis 8 g/m² aufweist. Der Durchmesser der Polypropylen-Meltblown-Fasem ist kleiner als 10 µm, besonders bevorzugt kleiner als 5 µm. Eine dritte Lage, die als Abdecklage fungiert, könnte aus Polypropylen-Fasern oder Polyester-Fasern aufgebaut sein. Diese Lage könnte ein Flächengewicht von 10 - 50 g/m² aufweisen und Fasern mit einem Durchmesser von 30 - 50 µm aufweisen. Dieser partikelfilternde Bereich ist besonders geeignet, um Ruß abzuscheiden. Des Weiteren erlaubt das Melt-Blown-Verfahren eine kostengünstige Fertigung und problemlose Einstellung der Lagenstärke.

Das Filtermedium könnte in Kombination zu mindestens einem partikelfilternden Bereich einen geruchsadsorbierenden Bereich aufweisen. Hierdurch kann das Filterelement als Kombifilter fungieren und einerseits Partikel und andererseits unangenehme Gerüche adsorbieren. Hierdurch kann ein Kraftfahrzeuginnenraum von unangenehmen Gerüchen befreit werden.

Vor diesem Hintergrund könnte der geruchsadsorbierende Bereich des Filtermediums Aktivkohlepartikel oder Flächengebilde aufweisen, die Aktivkohle aufweisen. Die Verwendung von Aktivkohle erlaubt effizient die Filterung' unangenehmer Gerüche. Der geruchsadsorbierende Bereich könnte körnige Aktivkohle mit einer Feinheit von 20 x 150 mesh, kugelförmige Aktivkohle oder Flächengebilde aufweisen, die aus Aktivkohlefasern bestehen.

Die Aktivkohle könnte durch eine Trägerlage aus Polyester mit einem Flächengewicht von 60 g/m² aufgenommen sein. Hierdurch ist die Aktivkohle einem bestehenden Lagenverbund separat zuordenbar, ohne dass Aktivkohle unerwünscht in den partikelfilternden Bereich eindringt.

Das Filtermedium könnte als Aktivkohleschaum ausgebildet sein. Ein Aktivkohleschaum erlaubt die Ausgestaltung eines besonders flachen Filtermediums. Des Weiteren ist ein Aktivkohleschaum problemlos in einen Rahmen einpressbar, da sich der Schaum gut komprimieren lässt, um eine feste Anlage im Rahmen sicherzustellen.

Das Filtermedium könnte Elektretfasern aufweisen. Die Verwendung von Elektretfasem erlaubt eine Steigerung der Filtereffizienz des Filtermediums, da durch elektrostatische Aufladung Schwebeteilchen aus der Luft auch dann am Filtermedium angelagert werden, wenn andere Abscheidemechanismen wie z.B. Trägheitskräfte oder auch die Abscheidung durch Diffusion der Partikel an die Fasern des Filtermediums weniger effektiv sind.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels des erfindungsgemäßen Filterelements anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Schnittansicht eines Filterelements, bei welchem zwei Filtermedien parallel zueinander angeordnet sind,
- Fig. 2: eine perspektivische Ansicht des Filterelements gemäß Fig. 1,
- Fig. 3: eine Schnittansicht des Rahmens des Filterelements gemäß Fig. 1 und Fig. 2 und
- Fig. 4: eine perspektivische Ansicht des Rahmens.

### Ausführung der Erfindung

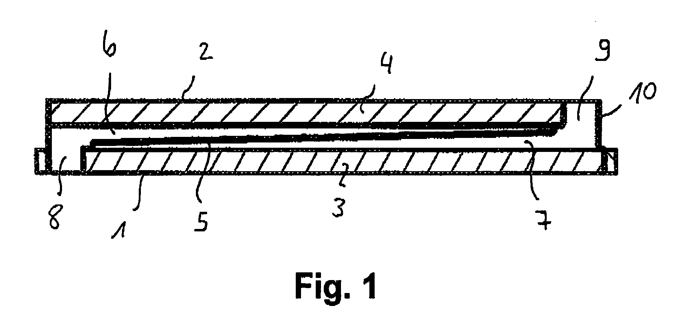

Fig. 1 zeigt eine Schnittansicht eines Filterelements, welches eine Anströmseite 1 und eine Abströmseite 2 aufweist. Dabei ist sowohl auf der Anströmseite 1 als auch auf der Abströmseite 2 jeweils ein Filtermedium 3, 4 angeordnet. Zwischen den Filtermedien 3, 4 ist eine Führungseinrichtung 5 angeordnet. Die Führungseinrichtung 5 bildet mindestens zwei Strömungskanäle 6, 7 aus, wobei ein erster Strömungskanal 6 mit dem abströmseitigen Filtermedium 4 und ein zweiter Strömungskanal 7 mit dem anströmseitigen Filtermedium 3 strömungsverbunden ist.

Anströmseitig ist ein Einlass 8 zum ersten Strömungskanal 6 ausgebildet, der neben dem anströmseitigen Filtermedium 3 positioniert ist.

Abströmseitig ist ein Einlass 9 zum zweiten Strömungskanal 7 ausgebildet, der neben dem abströmseitigen Filtermedium 4 positioniert ist.

Die Führungseinrichtung 5 ist als ebene Platte ausgebildet, die mit jedem der Filtermedien 3, 4 einen spitzen Winkel einschließt und geneigt angeordnet ist.

Die Führungseinrichtung 5 ist mit einem Rahmen 10 einstückig ausgebildet. Dabei sind die Filtermedien 3, 4 von dem Rahmen 10 umgeben. Die Filtermedien 3, 4 sind parallel zueinander angeordnet und schließen die Führungseinrichtung 5 zwischen sich ein. Die Filtermedien 3, 4 sind als Aktivkohleschaum ausgestaltet.

Das Filterelement bewirkt effektiv eine Filterflächenvergrößerung und kann Gerüche abscheiden.

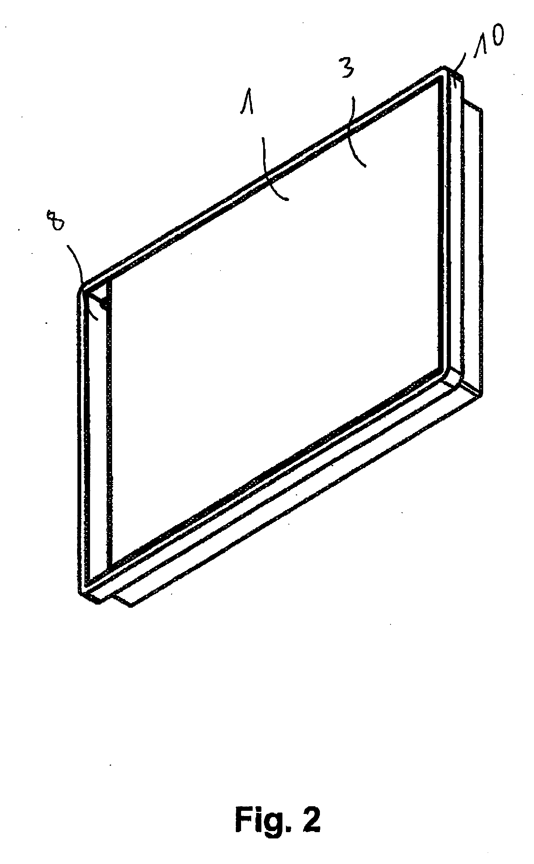

Fig. 2 zeigt eine perspektivische Ansicht des Filterelements gemäß Fig. 1. Auf der Anströmseite 1 ist das Filtermedium 3 im Rahmen 10 festgelegt. Der Einlass 8 zum ersten Strömungskanal 6 ist neben dem Filtermedium 3 positioniert.

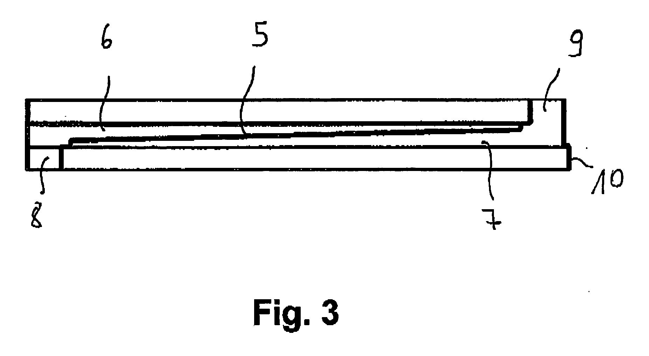

Fig. 3 zeigt eine Schnittansicht des Rahmens 10, welcher die Filtermedien 3, 4 aufnimmt. Der Rahmen 10 weist einen ersten Einlass 8 zu einem ersten Strömungskanal 6 auf. Des Weiteren weist der Rahmen 10 einen Einlass 9 zu einem zweiten Strömungskanal 7 auf. Der Rahmen 10 ist mit einer Führungseinrichtung 5 einstückig ausgebildet, die als ebene Platte ausgestaltet ist. Die Platte dient der Führung eines zu filtenden Fluids.

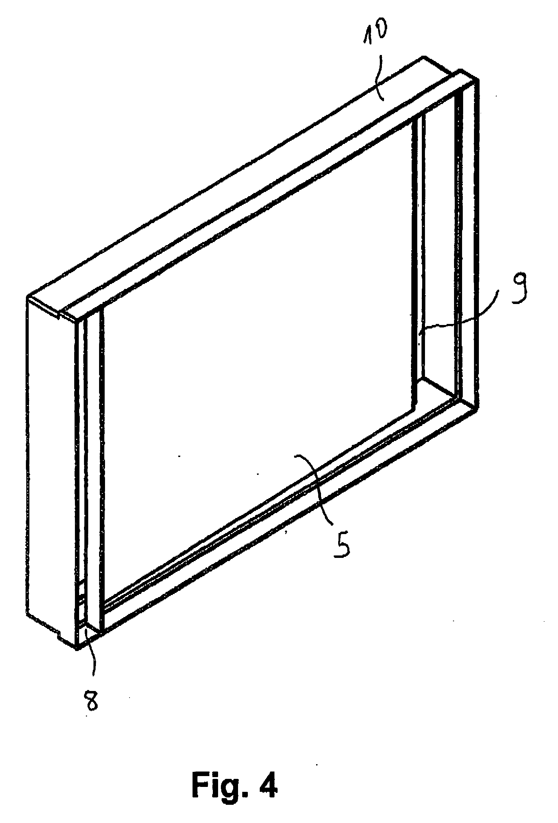

Fig. 4 zeigt den Rahmen 10 in einer perspektivischen Ansicht. Fig. 4 zeigt, dass die Führungseinrichtung 5 geneigt im Rahmen 10 positioniert ist. Fig. 4 zeigt den Einlass 8 zum ersten Strömungskanal 6 und den Einlass 9 zum zweiten Strömungskanal 7.

Das hier beschriebene Filterelement kann in Kraftfahrzeugen Verwendung finden. Insbesondere kann das hier beschriebene Filterelement als Autoinnenraumfilterelement verwendet werden, um unangenehme Gerüche abzuscheiden oder zu verringern. Das hier beschriebene Filterelement vergrößert auf raffinierte Weise die effektive Filterfläche durch parallele Anordnung der Filtermedien 3, 4 und Ausbildung zweier Strömungskanäle 6, 7.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor ausgewählte Ausführungsbeispiel lediglich zur Erörterung der erfindungsgemäßen Lehre dient, diese jedoch nicht auf dieses Ausführungsbeispiel einschränkt.

## Patentansprüche

1. Filterelement, umfassend eine Anströmseite (1) und eine Abströmseite (2), wobei sowohl auf der Anströmseite (1) als auch auf der Abströmseite (2) jeweils ein Filtermedium (3, 4) angeordnet ist und wobei zwischen den Filtermedien (3, 4) eine Führungseinrichtung (5) zur Führung eines zu filternden Fluids angeordnet ist, **dadurch gekennzeichnet, dass** die Führungseinrichtung (5) mindestens zwei Strömungskanäle (6, 7) ausbildet, wobei ein erster Strömungskanal (6) mit dem abströmseitigen Fiftermedium (4) und ein zweiter Strömungskanal (7) mit dem anströmseitigen Filtermedium (3) strömungsverbunden ist.

2. Filterelement nach Anspruch 1, **dadurch gekennzeichnet, dass** anströmseitig ein Einlass (8) zum ersten Strömungskanal (6) ausgebildet ist, der neben dem anströmseitigen Filtermedium (3) positioniert ist.

3. Filterelement nach Anspruch 1 oder 2, **dadurch gekennzeichnet, dass** abströmseitig ein Einlass (9) zum zweiten Strömungskanal (7) ausgebildet ist, der neben dem abströmseitigen Filtermedium (4) positioniert ist.

4. Filterelement nach einem der Ansprüche 1 bis 3, **dadurch gekennzeichnet, dass** die Führungseinrichtung (5) als Platte ausgebildet ist.

5. Filterelement nach einem der Ansprüche 1 bis 4, **dadurch gekennzeichnet, dass** die Führungseinrichtung (5) mit einem Rahmen (10) einstückig ausgebildet ist.

6. Filterelement nach einem der Ansprüche 1 bis 5, **dadurch gekennzeichnet, dass** die Filtermedien (3, 4) von einem Rahmen (10) umgeben sind.

7. Filterelement nach einem der Ansprüche 1 bis 6, **dadurch gekennzeichnet, dass** die Filtermedien (3, 4) parallel zueinander angeordnet sind.

8. Filterelement nach einem der Ansprüche 1 bis 7, **dadurch gekennzeichnet, dass** zumindest ein Filtermedium (3, 4) als Faltenbalg ausgebildet ist.

9. Filterelement nach Anspruch 8, **dadurch gekennzeichnet, dass** der Faltenbalg aus einem Vliesstoff gefertigt ist.

10. Filterelement nach einem der Ansprüche 1 bis 9, **dadurch gekennzeichnet, das** ein Filtermedium (3, 4) als Aktivkohleschaum ausgebildet ist.
